# EUROPÄISCHE PATENTSCHRIFT

(11) **EP 0 335 441 B1**
(45) Veröffentlichungstag und Bekanntmachung des Hinweises auf die Patenterteilung: **12.05.1993**
(21) Anmeldenummer: 89200705.5
(22) Anmeldetag: 18.03.1989
(51) Int. Cl.: B01D 53/36, F23J 15/00, C01B 17/56

(54) **Verfahren zur Reinigung von Rauchgasen**
Process for the purification of flue gases
Procédé pour la purification des gaz de fumée

(30) Priorität: 26.03.1988 DE 3810337
(43) Veröffentlichungstag der Anmeldung: 04.10.1989
(73) Patentinhaber: METALLGESELLSCHAFT AG, 60015 Frankfurt (DE); BASF Aktiengesellschaft, 67063 Ludwigshafen (DE)
(72) Erfinder: Dörr, Karl-Heinz, D-6500 Mainz (DE); Grimm, Hugo, D-8760 Miltenberg am Main (DE); Neumann, Heinz, D-6123 Bad König (DE); Adlkofer, Jürgen, Dr., D-6718 Grünstadt (DE)
(74) Vertreter: Rieger, Harald, Dr.

(56) Entgegenhaltungen:
- EP-A- 0 121 687
- EP-A- 0 254 362
- DE-A- 3 331 545
- DE-A- 3 601 378
- GB-A- 742 052

## Beschreibung

Die Erfindung betrifft ein Verfahren zur Reinigung von Rauchgasen oder anderen feuchten Abgasen, die NOₓ und SO₂ enthalten, wobei durch katalytische Behandlung der NOₓ-Gehalt reduziert und der SO₂-Gehalt zu SO₃ oxidiert wird und der SO₃-Gehalt anschließend durch Kondensation in Form von Schwefelsäure abgeschieden wird.

Rauchgase aus Feuerungsanlagen enthalten an Schadstoffen insbesondere NOₓ, SO₂, HCl und HF. So ergeben sich bei der Verfeuerung von Steinkohle mit einem Schwefelgehalt von 1 Gew.-% in Großfeuerungsanlagen bei einem Sauerstoffgehalt von 6 Vol.-% im Rauchgas z.B. SO₂-Gehalte zwischen 1900 und 2000 mg/Nm³, HCl-Gehalte unter 150 mg/Nm³ und HF-Gehalte unterhalb 50 mg/Nm³. Die NOₓ-Gehalte liegen - je nach Feuerungsart und verwendeter Kohle - unter 600 mg NO₂/Nm³ bis über 2000 mg NO₂/Nm³.

Zur Verringerung der Emission dieser Schadstoffe ist es bekannt, das Rauchgas einer katalytischen Nachbehandlung zu unterwerfen. Dabei wird das NOₓ mit NH₃ zu N₂ reduziert und das SO₂ zu SO₃ oxidiert. Anschließend wird das feuchte Gas unter den Schwefelsäure-Taupunktabgekühlt und das SO₃ in Form von Schwefelsäure auskondensiert.

Ein solches Verfahren ist aus der DE-A-33 31 545 bekannt. Das heiße, SO₂-haltige Rauchgas wird nach einer Entstaubung in einem Elektrofilter auf die für die Katalyse erforderliche Temperatur abgekühlt und dann das SO₂ katalytisch mit Sauerstoff zu SO₃ umgesetzt. Das feuchte, SO₃-haltige Gas wird zunächst in einer ersten Stufe eines Luftvorwärmers bis auf eine Temperatur oberhalb des Schwefelsäure-Taupunktes und dann in einer zweiten Stufe unter den Schwefelsäure-Taupunkt auf eine Temperatur abgekühlt, die der erforderlichen Eintrittstemperatur für den Kamin entspricht. Die zweite Stufe des Luftvorwärmers besteht aus säurefestem Werkstoff, beispielsweise aus Glasrohren.

Die US-PS 4 164 546 beschreibt ein solches verfahren, bei dem die heißen Rauchgase nach entsprechender Kühlung im Ekonomiser oder Luftvorwärmer unter Zusatz von Ammoniak katalytisch behandelt werden. Als Oxidationskatalysator kann ein Katalysator auf der Basis von V₂O₅ und K₂O verwendet werden. Das gebildete SO₃ wird in bekannter Weise abgeschieden.

Die DE-A-36 01 378 beschreibt ein verfahren, bei dem die Rauchgase zunächst zwecks Reduktion des NOₓ unter Ammoniakzusatz katalytisch behandelt werden und anschließend das SO₂ mit Sauerstoff katalytisch in SO₃ überführt wird. Nach der Katalyse wird das SO₃ nach einer Zwischenkühlung mit Wasser zu Schwefelsäure umgesetzt und das gereinigte Gas in den Kamin geleitet. Die Rauchgase werden entweder vor der Katalyse in einem heißgehenden Elektrofilter oder nach der Katalyse in einem staubfilter entstaubt.

Bei diesen verfahren enthalten die Rauchgase trotz der Entstaubung noch Reststaubmengen, die zum verstopfen und zur Schädigung des Katalysators führen können und die Verunreinigungen in die kondensierte Schwefelsäure einbringen.

Aus der GB-A-742 052 ist ein Verfahren zum Waschen und Kühlen von SO₂-haltigen Röst-oder Schwefelverbrennungsgasen bekannt. Das Gas soll von einer Temperatur von 400°C auf 150 - 50°C abgekühlt werden. Dazu wird das heiße Gas in einer ersten Wasch- und Kühlstufe mit verdünnter. 70%iger Schwefelsäure behandelt, wobei durch Verdampfung einer sehr großen Wassermenge aus der Waschsäure eine Kühlung erfolgt und das Gas mit Wasserdampf gesättigt wird. Bei einer Kühlung auf 117°C werden pro Kubikmeter Gas 0,149 kg Wasser verdampft. Anschließend wird das Gas in einer zweiten Kühlstufe durch Kühlung mittels Kühlflächen auf sehr niedrige Temperaturen abgekühlt.

Aus der EP-A-0 254 362 ist ein Verfahren zur Reinigung von Rauchgasen bekannt, in dem das Rauchgas direkt in einen Katalyseturm geleitet wird, wo der SO₂-Gehalt zu SO₃ oxidiert und der NOₓ-Gehalt zu N₂ reduziert wird.

Der Erfindung liegt die Aufgabe zugrunde, eine Verstopfung und Schädigung des Katalysators und eine Verunreinigung der Schwefelsäure in möglichst einfacher und wirtschaftlicher Weise zu verhindern.

Die Lösung dieser Aufgabe erfolgt erfindungsgemäß dadurch, daß die Rauchgase vor der katalytischen Behandlung durch Wäsche mit heißer verdünnter Schwefelsäure mit einer Schwefelsäurekonzentration von 70 bis 90 Gew.-% und einer Temperatur von 100 bis 200°C einer Feinentstaubung unterworfen werden, wobei Konzentration und Temperatur der verdünnten Schwefelsäure in Abhängigkeit vom Wassergehalt der Rauchgase so eingestellt werden, daß kein Wasser aus den Rauchgasen in die verdünnte Schwefelsäure übergeht und höchstens geringe Mengen an Wasser aus der verdünnten Schwefelsäure in das Rauchgas übergehen, und die verdünnte Schwefelsäure im Kreislauf geführt wird.

Die Konzentration und die Temperatur der verdünnten Schwefelsäure werden so gewählt, daß der Wasserdampf-Partialdruck der verdünnten Schwefelsäure gleich oder etwas größer ist als der Wasserdampf-Partialdruck des Gases. Dadurch wird vermieden, daß die Konzentration der Schwefelsäure durch Wasseraufnahme aus dem Gas verringert wird und zur Konstanthaltung der Konzentration ein Teil der Schwefelsäure abgeführt und durch konzentriertere Schwefelsäure ersetzt werden muß. Wenn eine geringe Menge an Wasser aus der verdünnten Schwefelsäure in das Gas übergeht, wird vermieden, daß bei Schwankungen mit höherem Wassergehalt im Gas aus dem Gas Wasser in die Schwefelsäure übergeht. Die zulässige Menge an Wasser, die aus der verdünnten Schwefelsäure in das Gas übergehen darf, richtet sich nach den Betriebsbedingungen der nachfolgenden Behandlung des Rauchgases. Wenn Wasser aus der Schwefelsäure in das Gas übergeht, wird diese Wassermenge ersetzt. Wenn z.B. ein Rauchgas von 170°C einen Wassergehalt von 50 g/Nm³ aufweist, das gewaschene Gas einen Wassergehalt von etwa 55 g/Nm³ haben soll, und die Temperatur des gewaschenen Gases 150°C sein soll, dann muß die Konzentration der verdünnten Schwefelsäure etwa 85 Gew.-% betragen, da diese Schwefelsäure bei 150°C einen Wasserdampf-Partialdruck von etwa 55 mm Hg hat, was etwa einem Wassergehalt von 55 g/Nm³ entspricht. Wenn die Austrittstemperatur des gewaschenen Gases 170°C sein soll, dann muß die verdünnte Schwefelsäure eine Konzentration von etwa 87,5 Gew.-% haben. Wenn der Wassergehalt im gewaschenen Gas 50 g/Nm³ betragen soll, dann muß bei 150°C die Konzentration etwa 85,5 Gew.-% und bei 170°C etwa 89 Gew.-% betragen. Die Wäsche kann in einem Venturi, einem Turm mit Füllkörperschicht oder Düsenboden, einer Kombination von Venturi und Turm oder anderen Wäschern erfolgen. Die verdünnte Schwefelsäure wird eingedüst oder gesprüht, in einen Sumpf abgeschieden und aus diesem im Kreislauf wieder eingeleitet. Vor dem Gasaustritt aus dem Wäscher wird ein Tropfenabscheider angeordnet.

Eine vorzugsweise Ausgestaltung besteht darin, daß die Schwefelsäurekonzentration der verdünnten Schwefelsäure 82 bis 88 Gew.-% beträgt. Dabei werden besonders gute Betriebsergebnisse erzielt.

Eine vorzugsweise Ausgestaltung besteht darin, daß die verdünnte Schwefelsäure mit einer Temperatur von 130 bis 180°C in die Wäsche geleitet wird. Dabei werden besonders gute Betriebsergebnisse erzielt.

Eine vorzugsweise Ausgestaltung besteht darin, daß die Wäsche mit der verdünnten Schwefelsäure in einer ersten Stufe im Gleichstrom durch Eindüsen in einen Venturi erfolgt und in einer zweiten Stufe im Gegenstrom durch Bedüsung einer Füllkörperschicht mit Schwefelsäure oder eines Venturibodens in einem Turm erfolgt. Der Venturiwäscher kann senkrecht angeordnet sein, am Boden einen eigenen Sumpf aufweisen und oberhalb des Sumpfes durch eine Verbindung mit dem Turm verbunden sein. Der Venturiwäscher kann auch horizontal angeordnet sein und mit seiner Austrittsöffnung direkt in den Turm oberhalb des Sumpfes einmünden. Durch das kombinierte Waschen im Gleichstrom im Venturiwäscher mit nachfolgendem Waschen im Gegenstrom im Turm wird ein besonders guter Wascheffekt bei geringem Druckverlust erzielt.

Eine vorzugsweise Ausgestaltung besteht darin, daß ein Teilstrom der verdünnten Schwefelsäure von Feststoffen befreit und dann wieder in die Wäsche geleitet wird. Die Entfernung der Feststoffe aus dem Teilstrom erfolgt nach einer evtl. Kühlung in üblicher Weise in Filtern. Durch Haftsäure am Filterkuchen verursachte Schwefelsäureverluste werden durch Zugabe von frischer Schwefelsäure ersetzt. Dadurch können die ausgewaschenen Feststoffe in einfacher Weise aus der verdünnten Schwefelsäure entfernt werden.

Das gewaschene Gas wird dann einer katalytischen Nachbehandlung unterworfen, wobei zunächst das NOₓ mit zugesetztem Ammoniak zu Stickstoff und anschließend das SO₂ ebenfalls katalytisch zu SO₃ umgesetzt wird. Da die katalytische Reduktion des NOₓ üblicherweise bei Temperaturen von 200 bis 500°C, vorzugsweise von 250 bis 400°C durchgeführt wird, wobei vorzugsweise Katalysatoren aus Titandioxid mit katalytisch aktiven Mengen an Vanadin-, Molybdän- und/oder Wolframoxiden eingesetzt werden, muß das aus der Wäsche kommende Gas, das Temperaturen von nicht über 200°C aufweist, eventuell aufgeheizt werden. Die von NOₓ in der ersten Stufe befreiten Gase werden dann einer zweiten Stufe zugeführt, in der das SO₂ katalytisch zu SO₃ oxidiert wird. Für die Oxidation des SO₂ zu SO₃ können die hierfür bekannten Katalysatoren eingesetzt werden, jedoch werden die bekannten V₂O₅-haltigen Katalysatoren gegenüber Edelmetallkatalysatoren wegen ihrer höheren Vergiftungsfestigkeit bevorzugt. Da die Arbeitstemperatur dieser Katalysatoren bei 380 bis 500°C und vorzugsweise bei 400 bis 450°C liegt, müssen die die NOₓ-Stufe verlassenden Gase gegebenenfalls auf diese Arbeitstemperatur aufgeheizt werden.

Eine vorzugsweise Ausgestaltung besteht darin, daß das aus der Wäsche austretende Gas in einem indirekten Wärmeaustauscher gegen das die SO₂-Oxidationsstufe verlassende katalysierte Gas auf die Arbeitstemperatur des Katalysators für die NOₓ-Reduktion aufgeheizt wird. Dadurch wird ein Teil des Wärmeinhaltes des katalysierten Gases aus der SO₂-Oxidationsstufe in günstiger Weise für das Verfahren ausgenutzt.

Eine vorzugsweise Ausgestaltung besteht darin, daß das Gas nach der NOₓ-Reduktion auf die Arbeitstemperatur des Katalysators für die SO₂-Oxidation aufgeheizt wird Dadurch können beide Stufen der Katalyse in optimaler Weise durchgeführt werden.

Eine vorzugsweise Ausgestaltung besteht darin, daß die Aufheizung des Gases auf die Arbeitstemperatur des Katalysators für die SO₂-Oxidation durch indirekten Wärmeaustausch erfolgt. Dadurch wird, im Gegensatz zu einem direkten Wärmeaustausch durch Zumischen von heißen verbrennungsgasen, das Gasvolumen nicht vergrößert und das Gas wird nicht verunreinigt.

Eine vorzugsweise Ausgestaltung besteht darin, daß die katalytische Behandlung des Rauchgases in horizontalen Kontakthorden mit Schüttgutkatalysatoren erfolgt. Vorzugsweise wird die Katalysatormasse in mehreren parallel geschalteten Kontakthorden angeordnet und durch jede Kontakthorde ein Teilgasstrom geleitet. Dadurch kann der Durchmesser der Kontakthorden gering gehalten werden.

Es ist zweckmäßig, die die zweite Katalysatorstufe verlassenden SO₃-haltigen Gase zunächst in indirektem Wärmeaustausch mit den aus der weiter unten beschriebenen Fein-Wäsche stammenden Gase nur auf eine Temperatur oberhalb des Taupunktes der Schwefelsäure abzukühlen und dann in einer weiteren Stufe die Temperatur unterhalb des Taupunktes der Schwefelsäure in einem weiteren indirekten Wärmeaustauscher zu senken.

Das so abgekühlte Gas wird dann in einen SO₃-Kondensator geleitet, dort durch Eindüsen von verdünnter Schwefelsäure der restliche Schwefelsäuredampf niedergeschlagen, wobei eine Schwefelsäure mit vorbestimmter Konzentration anfällt. Das aus dem SO₃-Kondensator austretende Gas wird in einem Fein-Wäscher durch Eindüsen einer wäßrigen Flüssigkeit gewaschen und auf 40 bis 60°C abgekühlt. Das gereinigte Gas wird auf die Eintrittstemperatur für den Kamin aufgeheizt.

Dieser zweite indirekte Wärmeaustauscher, in dem die Abkühlung des katalysierten Gases unter den Schwefelsäure-Taupunkt erfolgt, ist korrosionsfest ausgebildet, z.B. als Röhrenwärmeaustauscher mit Glasrohren, kunststoffbeschichteten oder emaillierten Rohren oder Graphitrohren. Die Austrittstemperatur des Gases wird auf etwa 120 bis 140°C eingestellt. Das im Wärmeaustauscher anfallende Schwefelsäurekondensat kann mit dem Schwefelsäurekondensat im Sumpf des SO₃-Kondensators vereinigt werden oder umgekehrt oder beide Sümpfe können getrennt abgezogen werden.

Der SO₃-Kondensator kann als Turm mit einer Füllkörperschicht oder als Turm mit einem oder mehreren Düsenböden, die mit der verdünnten Schwefelsäure besprüht werden, ausgebildet sen. Die verdünnte Schwefelsäure kann eingedüst oder gesprüht werden. Vor dem Gasaustritt aus dem SO₃-Kondensator kann ein Tropfenabscheider angeordnet sein. Die verdünnte Schwefelsäure wird in einen Sumpf am Boden abgeschieden. Zwischen dem zweiten indirekten Wärmeaustauscher und dem SO₃-Kondensator kann ein vertikaler oder horizontaler Venturi geschaltet werden, in dem eine zusätzliche Behandlung des Gases durch Eindüsen von verdünnter Schwefelsäure erfolgt. Die verdünnte Schwefelsäure wird im Kreislauf geführt. Die Temperatur, auf die das Gas im SO₃-Kondensator abgekühlt wird, ist abhängig vom Partialdruck der Gemischkomponenten H₂O/H₂SO₄. Die Konzentration der auskondensierten verdünnten Schwefelsäure wird vorzugsweise im Bereich von 60 bis 90 Gew.-% gewählt. Aus dieser Vorgabe ergibt sich die erforderliche Temperatur der in den SO₃-Kondensator eingedüsten verdünnten Schwefelsäure, da die Konzentration der anfallenden verdünnten Schwefelsäure sich nach der Temperatur richtet, mit der das Gas aus dem SO₃-Kondensator austritt. Diese Austrittstemperatur ist abhängig von der Temperatur, mit der die verdünnte Schwefelsäure in den SO₃-Kondensator eingeleitet wird. Der nachfolgende Fein-Wäscher kann wie der SO₃-Kondensator ausgebildet sein, er kann aber auch als Venturi ausgebildet sein, in dem die Feinwäsche im Gleichstrom erfolgt. Der Wäscher kann auf den SO₃-Kondensator aufgesetzt werden oder separat angeordnet sein. In beiden Fällen besteht keine Verbindung zwischen den Flüssigkeitskreisläufen. Als wäßrige Flüssigkeit kann Wasser oder sehr dünne Schwefelsäure bis zu etwa 20 Gew.-% verwendet werden oder jede andere Flüssigkeit, die HCl und HF auswäscht. Die wäßrige Flüssigkeit wird zweckmäßigerweise im Kreislauf geführt, wobei die vom Gas aufgenommene Wassermenge ersetzt wird. Die im Wäscher aufgenommenen Schadstoffe werden kontinuierlich aus einem abgeleiteten Teilstrom oder diskontinuierlich entfernt, z.B. durch Neutralisation. Vor dem Gasaustritt aus dem Wäscher kann ein Filter angeordnet sein, das als Kerzenfilter, Wiremeshfilter, lamellenförmig oder als Filterschüttung ausgebildet sein kann. Die in den Fein-Wäscher eingedüste wäßrige Flüssigkeit kann H₂O₂ oder H₂S₂O₈ enthalten, wodurch auch restliches SO₂ zu SO₃ oxidiert und absorbiert wird. Außerdem können dadurch Schwankungen bei der katalytischen Umsetzung von SO₂ zu SO₃ bzw. ein Ausfall des Katalysators aufgefangen werden. Auch der NOₓ-Gehalt wird gesenkt.

Eine vorzugsweise Ausgestaltung besteht darin, daß das im indirekten Wärmeaustauscher gegen das aus der Wäsche austretende Gas abgekühlte katalysierte Gas in einem zweiten indirekten Wärmeaustauscher gegen das gereinigte Abgas auf eine Temperatur unterhalb des Schwefelsäure-Taupunktes weiter abgekühlt und dann in einen SO₃-Kondensator geleitet wird, durch Eindüsen von verdünnter Schwefelsäure der restliche Schwefelsäuredampf absorbiert wird, wobei eine Schwefelsäure mit vorbestimmter Konzentration anfällt, das aus dem SO₃-Kondensator austretende Gas in einem Fein-Wäscher durch Eindüsen einer wäßrigen Flüssigkeit gewaschen und auf 40 bis 60°C abgekühlt wird, und das gereinigte Gas in dem zweiten indirekten Wärmeaustauscher auf die Eintrittstemperatur für den Kamin aufgeheizt wird.

Eine vorzugsweise Ausgestaltung besteht darin, das die Konzentration der verdünnten Schwefelsäure in dem SO₃-Kondensator 60 bis 90 Gew.-% und die Temperatur 90 bis 140°C beträgt. In diesen Bereichen werden besonders gute Betriebsbedingungen erzielt.

Eine vorzugsweise Ausgestaltung besteht darin, daß die katalytische Behandlung des Rauchgases in horizontalen Kontakthorden mit Schüttgutkatalysatoren erfolgt. Vorzugsweise wird die Katalysatormasse in mehreren parallel geschalteten Kontakthorden angeordnet und durch jede Kontakthorde ein Teilgasstrom geleitet. Dadurch kann der Durchmesser der Kontakthorden gering gehalten werden. Falls zur Erzielung des gewünschten Umsetzungsgrades mehrere Kontakthorden erforderlich sind, werden diese hintereinander geschaltet.

Eine vorzugsweise Ausgestaltung besteht darin, daß das gereinigte Gas vor dem Eintritt in den Kamin durch indirekten Wärmeaustausch auf eine Temperatur von 72 bis 80°C abgekühlt wird. In vielen Fällen ist diese Temperatur als Eintrittstemperatur in den Kamin ausreichend und durch den Wärmeaustausch kann noch eine entsprechende Wärmemenge nutzbringend gewonnen werden.

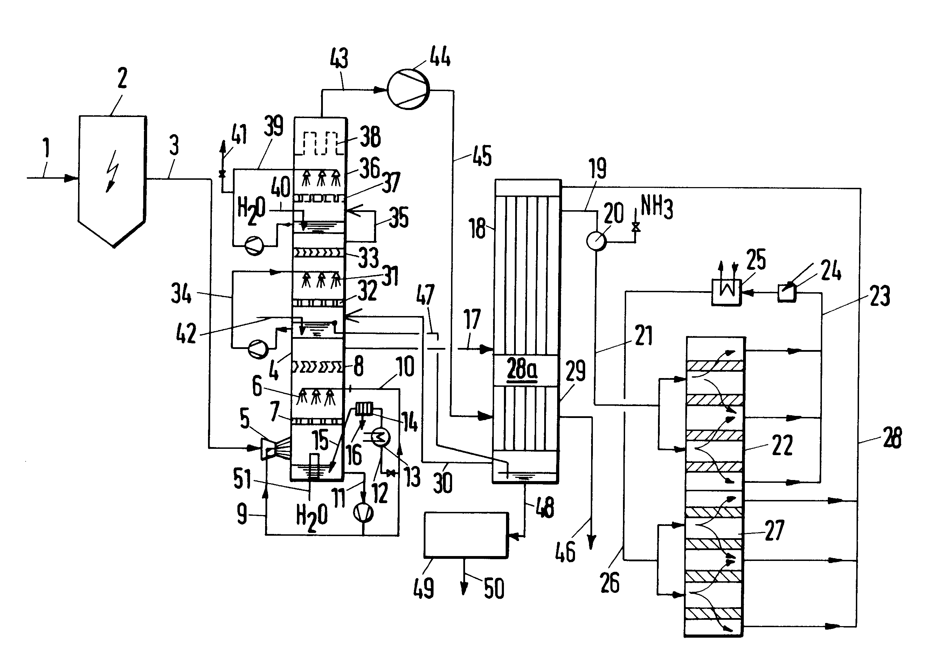

Die Erfindung wird anhand der Figur und eines Ausführungsbeispieles näher und beispielsweise erläutert.

Das über Leitung (1) kommende Rauchgas wird im Elektrofilter (2) entstaubt und über Leitung (3) in den Wäscher (4) geleitet. Der Wäscher (4) besteht aus dem horizontal angeordneten Venturi (5) und dem Turm (6) in dem ein Düsenboden (7) und ein Tropfenabscheider (8) angeordnet sind. Verdünnte Schwefelsäure wird über Leitung (9) in den Venturi (5) eingedüst und über Leitung (10) auf den Düsenboden (7) gesprüht. Aus dem Sumpf am Boden des Wäschers (4) wird die abgeschiedene verdünnte Schwefelsäure abgezogen und wieder im Kreislauf in die Leitungen (9) und (10) gepumpt. Ein Teilstrom der verdünnten Schwefelsäure wird über Leitung (12), Kühlung (13), in ein Filter (14) geleitet. Das Filtrat wird über Leitung (15) wieder in den Wäscher (4) geleitet, während der Feststoff über (16) abgeführt wird. Über Leitung (51) wird in den Sumpf des Wäschers (4) das dort aufgenommene Wasser ergänzt. Das gewaschene Gas wird über Leitung (17) in den Röhrenwärmeaustauscher (18) geleitet, dort aufgeheizt und über Leitung (19) in die Mischvorrichtung (20) geleitet, wo NH₃ zugemischt wird. Das Gas wird dann über Leitung (21) in die Stufe für die NOₓ-Reduktion (22) geleitet und aus dieser über Leitung (23) abgezogen. Das von NOₓ befreite Gas wird dann bei (24) durch direkte Zuheizung oder bei (25) durch indirekten Wärmeaustausch mit Dampf aufgeheizt und über Leitung (26) in die Stufe für die katalytische SO₂-Oxidation (27) geleitet. Über Leitung (28) wird das SO₃-haltige Gas in den Röhrenwärmeaustauscher (18) geleitet, dort abgekühlt, dann in den Röhrenwärmeaustauscher (29) geleitet und aus diesem über Leitung (30) in den SO₃-Kondensator (31) geleitet, der einen Düsenboden (32) und einen Tropfenabscheider (33) enthält. Über Leitung (34) wird verdünnte Schwefelsäure aus dem Sumpf des SO₃-Kondensators im Kreislauf geführt und auf den Düsenboden gesprüht. Über Leitung (35) wird das von SO₃ weitgehend befreite Gas in den Fein-Wäscher (36) geleitet, der einen Düsenboden (37) und ein Kerzenfilter (38) enthält. Über Leitung (39) wird Waschwasser aus dem Sumpf des Wäschers (36) im Kreislauf geführt und auf den Düsenboden (37) gesprüht. Das vom Gas aufgenommene Wasser wird über Leitung (40) in den Sumpf des Wäschers (36) ersetzt. Aus der Leitung (39) wird ein Teilstrom der Waschflüssigkeit über Leitung (41) zu einem nicht dargestellten Stripper geleitet und nach Entfernung von HCl und HF über Leitung (42) in den Sumpf des SO₃-Kondensators (31) zurückgeleitet. Das gereinigte Gas verläßt den Fein-Wäscher über Leitung (43). Nach dem Gebläse (44) wird das Gas über Leitung (45) in den Röhrenwärmeaustauscher (29) geleitet, dort aufgeheizt und dann über Leitung (46) zum Kamin geführt. Die im SO₃-Kondensator (31) anfallende verdünnte Schwefelsäure wird über Leitung (47) in den Sumpf des Röhrenwärmeaustauschers (29) geleitet. Aus dem Sumpf des Röhrenwärmeaustauschers (29), wird die anfallende verdünnte Schwefelsäure über Leitung (48) in den Aufkonzentrierer (49) geleitet, dort aufkonzentriert und über Leitung (50) als Produktion abgezogen.

### Beispiel

Die Angaben beziehen sich auf die Positionen in der Figur.

| Leitung (3) | |
|---|---|
| Gas | 200 000 Nm³/h |
| Temperatur | 170 °C |
| SO₂ | 2 000 mg/Nm³ |
| NOₓ | 800 mg/Nm³ |
| SO₃ | 50 mg/Nm³ |
| HCl | 150 mg/Nm³ |
| HF | 30 mg/Nm³ |
| H₂O | 50 g/Nm³ |
| Staub | 50 mg/Nm³ |

| Leitung (17) | |
|---|---|
| Gas | 200 000 Nm³/h |
| Temperatur | 150 °C |
| H₂O | 55 g/Nm³ |
| Staub | 0 bis Spuren |
| SO₂, NOₓ, SO₃, HCl, HF - wie Leitung (3) | |

| Leitung (19) | |
|---|---|
| Gas | 200 000 Nm³/h |
| Temperatur | 380 °C |
| SO₂, NOₓ, SO₃, HCl, HF, H₂O - wie Leitung (17) | |

| Leitung (23) | |
|---|---|
| Gas | 200 000 Nm³/h |
| Temperatur | 380 °C |
| NOₓ | 100 mg/Nm³ (gerechnet als NO) |
| SO₂, SO₃, HCl, HF, H₂O - wie Leitung (21) | |

| Leitung (26) | |
|---|---|
| Gas | 200 000 Nm³/h |
| Temperatur | 420 °C |
| SO₂, NOₓ, SO₃, HCl, HF, H₂O - wie Leitung (23) | |

| Leitung (28) | |
|---|---|
| Gas | 200 000 Nm³/h |
| Temperatur | 420 °C |
| SO₂ | 140 mg/Nm³ |
| SO₃ | 2 375 mg/Nm³ |
| NOₓ, HCl, HF, H₂O -wie Leitung (26) | |

| Gaskanal (28 a) | |
|---|---|
| Gas | 200 000 Nm³/h |
| Temperatur | 190 °C |
| SO₂, SO₃, NOₓ, HCl, HF, H₂O - wie Leitung (28) | |

| Leitung (30) | |
|---|---|
| Gas | 200 000 Nm³/h |
| Temperatur | 130 °C |
| SO₃ | 1.420 mg/Nm³ |
| SO₂, NOₓ, HCl, HF, H₂O - wie Gaskanal (28 a) | |

| Leitung (35) | |
|---|---|
| Gas | 200 000 Nm³/h |
| Temperatur | 120 °C |
| SO₃ | 50 mg/Nm³ |
| NOₓ, HCl, HF, H₂O -wie Leitung (35) | |

| Leitung (43) | |
|---|---|
| Gas | 200 000 Nm³/h |
| Temperatur | 50 °C |
| HCl | 50 mg/Nm³ |
| HF | Spuren |
| H₂O | 100 g/Nm³ |
| NOₓ | 50 mg/Nm³ |

| Leitung (45) | |
|---|---|
| Gas | 200 000 Nm³/h |
| Temperatur | 60 °C |
| SO₂, SO₃, NOₓ, HCl, HF, H₂O - wie Leitung (43) | |

| Leitung (46) | |
|---|---|
| Gas | 200 000 Nm³/h |
| Temperatur | 120 °C |
| SO₂ | 140 mg/Nm³ |
| NOₓ | 100 mg/Nm³ (gerechnet als NO) |
| SO₃ | 50 mg/Nm³ |
| HCl | 50 mg/Nm³ |
| HF | Spuren |
| H₂O | 100 g/Nm³ |

| Leitung (9) | |
|---|---|
| Säure | 200 m³/h |
| Temperatur | 150 °C |
| Konzentration | 85 Gew.-% H₂SO₄ |

| Leitung (10) | |
|---|---|
| Säure | 200 m³/h |
| Temperatur | 150 °C |
| Konzentration | 85 Gew.-% H₂SO₄ |

| Leitung (11) | |
|---|---|
| Säure | 410 m³/h |
| Temperatur | 150 °C |
| Konzentration | 85 Gew.-% H₂SO₄ |

| Leitung (12) | |
|---|---|
| Säure | 10 m³/h |
| Temperatur | 150 °C |
| Konzentration | 85 Gew.-% H₂SO₄ |

| Leitung (15) | |
|---|---|
| Säure | 10 m³/h |
| Temperatur | 40 °C |
| Konzentration | 85 Gew.-% H₂SO₄ |

| Leitung (34) | |
|---|---|
| Säure | 400 m³/h |
| Temperatur | 120 °C |
| Konzentration | 77 Gew.-% H₂SO₄ |

| Leitung (39) | |
|---|---|
| Säure | 400 m³/h |
| Temperatur | 50 °C |
| Konzentration | Sauerwasser |

| Leitung (41) | |
|---|---|
| Säure | 1,0 m³/h |
| Temperatur | 50 °C |
| Konzentration | Sauerwasser |

| Leitung (47) | |
|---|---|
| Säure | 300 kg/h |
| Temperatur | 120 °C |
| Konzentration | 77 Gew.-% H₂SO₄ |

| Leitung (48) | |
|---|---|
| Säure | 715 kg/h |
| Temperatur | 122 °C |
| Konzentration | 78 Gew.-% H₂SO₄ |

| Leitung (50) | |
|---|---|
| Säure | 606 kg/h |
| Temperatur | 40 °C |
| Konzentration | 92 Gew.-% H₂SO₄ |

| Leitung (40) | |
|---|---|
| Wasser | 8,5 m³/h |

| Leitung (42) | |
|---|---|
| Wasser | 1,0 m³/h |

| Leitung (51) | |
|---|---|
| Wasser | 2,6 m³/h |

### Leitung (16)

Das Filtrat enthält ca. 10 kg/h Feststoff aus der Staubabscheidung.

Die Vorteile der Erfindung bestehen darin, daß die Gase ohne bzw. mit geringem Temperaturverlust weitgehendst von Staub befreit werden können und damit eine Verunreinigung und Schädigung des Katalysators sowie eine Verunreinigung der Schwefelsäure vermieden bzw. stark herabgesetzt wird. Dadurch wird das Gesamtverfahren in einfacher und wirtschaftlicher Weise wesentlich verbessert. Es ist die Verwendung von Schüttgutkatalysatoren in Horden möglich.

## Patentansprüche

1. Verfahren zur Reinigung von Rauchgasen oder anderen feuchten Abgasen, die NOₓ und SO₂ enthalten, wobei durch katalytische Behandlung der NOₓ-Gehalt reduziert und der SO₂-Gehalt zu SO₃ oxidiert wird und der SO₃-Gehalt anschließend durch Kondensation in Form von Schwefelsäure abgeschieden wird, dadurch gekennzeichnet, daß die Rauchgase vor der katalytischen Behandlung durch Wäsche mit heißer verdünnter Schwefelsäure mit einer Schwefelsäurekonzentration von 70 bis 90 Gew.-% und einer Temperatur von 100 bis 200°C einer Fein-Entstaubung unterworfen werden, wobei Konzentration und Temperatur der verdünnten Schwefelsäure in Abhängigkeit vom Wassergehalt der Rauchgase so eingestellt werden, daß kein Wasser aus den Rauchgasen in die verdünnte Schwefelsäure übergeht und höchstens geringe Mengen an Wasser aus der verdünnten Schwefelsäure in das Rauchgas übergehen, und die verdünnte Schwefelsäure im Kreislauf geführt wird.

2. Verfahren nach Anspruch 1, dadurch gekennzeichnet, daß die Schwefelsäurekonzentration der verdünnten Schwefelsäure 82 bis 88 Gew.-% beträgt.

3. Verfahren nach Anspruch 1 oder Anspruch 2, dadurch gekennzeichnet, daß die verdünnte Schwefelsäure mit einer Temperatur von 130 bis 180°C in die Wäsche geleitet wird.

4. Verfahren nach einem der Ansprüche 1 bis 3, dadurch gekennzeichnet, daß die Wäsche mit der verdünnten Schwefelsäure in einer ersten Stufe im Gleichstrom durch Eindüsen in einen Venturi erfolgt und in einer zweiten Stufe im Gegenstrom durch Bedüsung einer Füllkörperschicht oder eines Venturibodens in einem Turm erfolgt.

5. Verfahren nach einem der Ansprüche 1 bis 4, dadurch gekennzeichnet, daß ein Teilstrom der verdünnten Schwefelsäure von Feststoffen befreit und dann wieder in die Wäsche geleitet wird.

6. Verfahren nach einem der Ansprüche 1 bis 5, dadurch gekennzeichnet, daß das aus der Wäsche austretende Gas in einem indirekten Wärmeaustauscher gegen das die SO₂-Oxidationsstufe verlassende katalysierte Gas auf die Arbeitstemperatur des Katalysators für die NOₓ-Reduktion aufgeheizt wird.

7. Verfahren nach einem der Ansprüche 1 bis 6, dadurch gekennzeichnet, daß das Gas nach der NOₓ-Reduktion auf die Arbeitstemperatur des Katalysators für die SO₂-Oxidation aufgeheizt wird.

8. Verfahren nach Anspruch 7, dadurch gekennzeichnet, das die Aufheizung des Gases auf die Arbeitstemperatur des Katalysators für die SO₂-Oxidation durch indirekten Wärmeaustausch erfolgt.

9. Verfahren nach Anspruch 6, dadurch gekennzeichnet, das das im indirekten Wärmeaustauscher gegen das aus der Wäsche austretende Gas abgekühlte katalysierte Gas in einem zweiten indirekten Wärmeaustauscher gegen das gereinigte Abgas auf eine Temperatur unterhalb des Schwefelsäure-Taupunktes weiter abgekühlt und dann in einen SO₃-Kondensator geleitet wird, durch Eindüsen von verdünnter Schwefelsäure der restliche Schwefelsäuredampf absorbiert wird, wobei eine Schwefelsäure mit vorbestimmter Konzentration anfällt, das aus dem SO₃-Kondensator austretende Gas in einem Fein-Wäscher durch Eindüsen einer wäßrigen Flüssigkeit gewaschen und auf 40 bis 60°C abgekühlt wird, und das gereinigte Gas in dem zweiten indirekten Wärmeaustauscher auf die Eintrittstemperatur für den Kamin aufgeheizt wird.

10. Verfahren nach Anspruch 9, dadurch gekennzeichnet, daß die Konzentration der verdünnten Schwefelsäure in dem SO₃-Kondensator 60 bis 90 Gew.-% und die Temperatur 90 bis 140°C beträgt.

11. Verfahren nach einem der Ansprüche 1 bis 10, dadurch gekennzeichnet, daß die katalytische Behandlung des Rauchgases in horizontalen Kontakthorden mit Schüttgutkatalysatoren erfolgt.

12. Verfahren nach einem der Ansprüche 1 bis 11, dadurch gekennzeichnet, daß das gereinigte Gas vor dem Eintritt in den Kamin durch indirekten Wärmeaustausch auf eine Temperatur von 72 bis 80°C abgekühlt wird.

## Claims

1. A process for the purification of flue gases or other moist waste gases which contain NOₓ and SO₂, in which the NOₓ content is reduced and the SO₂ content is oxidised to SO₃ by catalytic treatment and the SO₃ content is then separated off by condensation in the form of sulphuric acid, characterised in that the flue gases before the catalytic treatment are subjected to a fine dust removal operation by washing with hot dilute sulphuric acid having a sulphuric acid concentration of 70 to 90% by weight and a temperature of 100 to 200°C, the concentration and temperature of the dilute sulphuric acid being set as a function of the water content of the flue gases such that no water passes from the flue gases into the dilute sulphuric acid and at most small quantities of water pass from the dilute sulphuric acid into the flue gas, and the dilute sulphuric acid is recycled.

2. A process according to Claim 1, characterised in that the sulphuric acid concentration of the dilute sulphuric acid is 82 to 88% by weight.

3. A process according to Claim 1 or Claim 2, characterised in that the dilute sulphuric acid is passed into the washing stage at a temperature of 130 to 180°C.

4. A process according to one of Claims 1 to 3, characterised in that the washing with the dilute sulphuric acid takes place in a first stage in a co-current flow by injecting into a venturi and in a second stage in a counter-current by spraying a layer of filler or a venturi plate in a tower.

5. A process according to one of Claims 1 to 4, characterised in that a partial stream of the dilute sulphuric acid is freed of solids and then is passed back into the washing stage.

6. A process according to one of Claims 1 to 5, characterised in that the gas emerging from the washing stage is heated to the working temperature of the catalyst for the NOₓ reduction in an indirect heat exchanger with the catalysed gas leaving the SO₂ oxidation stage.

7. A process according to one of Claims 1 to 6, characterised in that the gas after the NOₓ reduction is heated to the operating temperature of the catalyst for the SO₂ oxidation.

8. A process according to Claim 7, characterised in that the heating of the gas to the operating temperature of the catalyst for the SO₂ oxidation takes place by indirect heat exchange.

9. A process according to Claim 6, characterised in that the catalysed gas which is cooled in the indirect heat exchanger with the gas emerging from the washing stage is cooled further to a temperature below the sulphuric acid dew point in a second indirect heat exchanger with the purified waste gas and is then passed into an SO₃ condenser, the remaining sulphuric acid vapour is absorbed by injecting dilute sulphuric acid, with a sulphuric acid having a predetermined concentration being produced, the gas emerging from the SO₃ condenser is washed in a fine scrubber by injecting an aqueous liquid and is cooled to 40 to 60°C, and the purified gas is heated in the second indirect heat exchanger to the entry temperature for the chimney.

10. A process according to Claim 9, characterised in that the concentration of the dilute sulphuric acid in the SO₃ condenser is 60 to 90% by weight and the temperature is 90 to 140°C.

11. A process according to one of Claims 1 to 10, characterised in that the catalytic treatment of the flue gas takes place in horizontal contact trays with bulk material catalysts.

12. A process according to one of Claims 1 to 11, characterised in that the purified gas before entry into the chimney is cooled by indirect heat exchange to a temperature of 72 to 80°C.

## Revendications

1. Procédé d'épuration de gaz de fumée ou d'autres effluents gazeux humides, qui contiennent NOₓ et SO₂, en réduisant la teneur en NOₓ par traitement catalytique et en oxydant la teneur en SO₂ en SO₃, et en séparant ensuite la teneur en SO₃ par condensation sous forme d'acide sulfurique, caractérisé en ce qu'il consiste à soumettre les gaz de fumée, avant le traitement catalytique, à un dépoussiérage fin par lavage par de l'acide sulfurique chaud et dilué ayant une concentration d'acide sulfurique de 70 à 90 % en poids et une température de 100 à 200°C, la concentration et la température de l'acide sulfurique dilué étant réglées en fonction de la teneur en eau des gaz de fumée, de manière que de l'eau ne passe pas des gaz de fumée dans l'acide sulfurique dilué et que tout au plus des quantités faibles d'eau passent de l'acide sulfurique dilué dans le gaz de fumée, et à faire circuler l'acide sulfurique dilué en circuit fermé.

2. Procédé suivant la revendication 1, caractérisé en ce que la concentration de l'acide sulfurique dilué est comprise entre 82 et 88 % en poids.

3. Procédé suivant la revendication 1 ou suivant la revendication 2, caractérisé en ce qu'il consiste à envoyer l'acide sulfurique dilué au lavage à une température de 130 à 180°C.

4. Procédé suivant l'une des revendications 1 à 3, caractérisé en ce qu'il consiste à effectuer le lavage par l'acide sulfurique dilué dans un premier stade en courant de même sens par injection dans un venturi et, dans un second stade, à contre-courant par projection sur une couche de garnissage ou sur un plateau à venturi dans une tour.

5. Procédé suivant l'une des revendications 1 à 4, caractérisé en ce qu'il consiste à débarrasser un courant partiel de l'acide sulfurique dilué des substances solides et à le retourner ensuite au lavage.

6. Procédé suivant l'une des revendications 1 à 5, caractérisé en ce qu'il consiste à porter le gaz sortant du lavage, dans un échangeur de chaleur par voie indirecte, par le gaz catalysé quittant le stade d'oxydation du SO₂, à la température opératoire du catalyseur pour la réduction de NOₓ.

7. Procédé suivant l'une des revendications 1 à 6, caractérisé en ce qu'il consiste à porter le gaz, après la réduction de NOₓ, à la température opératoire du catalyseur pour l'oxydation du SO₂.

8. Procédé suivant la revendication 7, caractérisé en ce qu'il consiste à porter le gaz à la température opératoire du catalyseur pour l'oxydation du SO₂ par échange de chaleur indirecte.

9. Procédé suivant la revendication 6, caractérisé en ce qu'il consiste à refroidir le gaz, catalysé et refroidi dans un échangeur de chaleur par voie indirecte par du gaz sortant du laveur, dans un deuxième échangeur de chaleur par voie indirecte, par l'effluent gazeux épuré, à une température inférieure au point de rosée de l'acide sulfurique, puis à l'envoyer dans un condensateur de SO₃, à absorber la vapeur d'acide sulfurique restante par injection d'acide sulfurique dilué, avec obtention d'un acide sulfurique ayant une concentration prescrite, à laver le gaz sortant du condensateur de SO₃ dans un laveur fin par injection d'un liquide aqueux et à le refroidir entre 40 et 60°C, et à porter le gaz épuré dans le deuxième échangeur de chaleur par voie indirecte à la température d'entrée dans la cheminée.

10. Procédé suivant la revendication 9, caractérisé en ce que la concentration de l'acide sulfurique dilué dans le condensateur de SO₃ est comprise entre 60 et 90 % en poids, et la température est comprise entre 90 et 140°C.

11. Procédé suivant l'une des revendications 1 à 10, caractérisé en ce qu'il consiste à effectuer le traitement catalytique du gaz de fumée dans des claies de contact horizontales à catalyseurs en vrac.

12. Procédé suivant l'une des revendications 1 à 11, caractérisé en ce qu'il consiste à refroidir le gaz épuré avant l'entrée dans la cheminée, par échange de chaleur par voie indirecte, jusqu'à une température de 72 à 80°C.
